# DEMANDE DE BREVET EUROPEEN

(11) **EP 4 775 600 A1**
(43) Date de publication de la demande: **15.07.2026**
(21) Numéro de dépôt: 25218274.6
(22) Date de dépôt: 25.11.2025
(51) Int. Cl.: C08F 2/18, C08F 222/02, C08F 224/00, C11D 3/37

(54) **NOUVEAUX COPOLYMERES; PROCEDE POUR LEUR PREPARATION ; UTILISATION EN DETERGENCE ; FORMULATIONS DETERGENTES EN COMPRENANT**

(30) Priorité: 08.01.2025 FR 2500148
(71) Demandeur: Société d'Exploitation de Produits pour les Industries Chimiques SEPPIC, 75321 Paris cedex 07 (FR)
(72) Inventeur: MONTEILLET, Stéphane, 75321 Paris Cedex 07 (FR); BODOC, Miruna, 75321 Paris Cedex 07 (FR)
(74) Mandataire: Air Liquide

(57) **Abrégé**

L'invention a pour objet de nouveaux copolymères linéaires ou réticulés constitués d'unités monomériques issues de la Tulipalin A et de l'acide itaconique, le procédé pour leur préparation, leur utilisation en détergence industrielle ou ménagère et les formulations en comportant.

## Description

### DOMAINE TECHNIQUE DE L'INVENTION

L'invention relève du domaine de la détergence ménagère et industrielle. L'invention concerne plus particulièrement un nouveau procédé de synthèse d'agents épaississants d'origine naturelle mis en œuvre dans de telles formulations.

### ÉTAT DE LA TECHNIQUE ANTÉRIEURE

Les formulations détergentes à usage industriel ou ménager de l'état de la technique antérieure sont soit alcalines soit acides.
- Les formulations détergentes alcalines sont généralement utilisées pour éliminer des surfaces solides, les salissures de matières grasses.
- Les formulations détergentes acides sont utilisées non seulement pour éliminer les salissures grasses mais aussi pour détartrer lesdites surfaces, notamment celles d'installations de l'industrie agro-alimentaire, ou d'équipements électroménagers, comme les lave-vaisselle et les machines à café. De plus, elles sont aussi utilisées pour éliminer des résidus de béton ou de ciment ainsi que pour des opérations de nettoyage de graisses présentes en profondeur sur des surfaces de béton avant toute opération de peinture. Elles ne doivent ne pas provoquer une formation importante de mousse lors de l'opération de nettoyage et doivent avoir de bonnes propriétés mouillantes et détergentes.

Les formulations détergentes à usage industriel ou ménager se présentent sous forme de poudres, de concentrés, de liquides tels que des émulsions, et selon les cas, sont mises en œuvre directement ou après dilution dans un solvant approprié. Sous forme liquide, telles que notamment les émulsions, elles comportent des modificateurs de rhéologie des phases polaires. Parmi les polymères modificateurs de rhéologie des phases polaires, il y a notamment les polyélectrolytes anioniques ou cationiques, amphiphiles, linéaires ou ramifiés, réticulés ou non réticulés. Ces polymères, une fois introduits dans des phases polaires présentent la propriété de se déployer sous l'effet des forces de répulsions électrostatiques dues à la présence des charges négatives et/ou positives sur le squelette polymérique, linéaire ou ramifié, non réticulé ou réticulé. Les modificateurs de rhéologie apportent à la fois une augmentation de la viscosité de la phase polaire et confère une certaine consistance et stabilité à la formule détergente ou nettoyante à épaissir.

Malgré l'offre commerciale importante, la demande de nouveaux épaississants de phases polaires pour les formulations détergentes à usage industriel ou ménager reste d'actualité car les polymères utilisés aujourd'hui sont majoritairement d'origine pétrochimique, alors que les industries utilisatrices sont engagées dans une démarche d'éco-conception. Il est donc nécessaire de développer des épaississants alternatifs qui, tout en ayant des propriétés comparables, ont un profil environnemental amélioré, soit par leur origine ou celle de leurs précurseurs, soit par leur caractère biodégradable.

Les inventeurs ont donc cherché à développer de nouveaux polymères épaississants qui soient synthétisés à partir de monomères d'origine naturelle et qui soient utilisables comme épaississants, émulsionnants dans des formulations détergentes à usage industriel ou ménager.

### EXPOSE DE L'INVENTION

C'est la raison pour laquelle, selon un premier aspect l'invention a pour objet un copolymère linéaire ou réticulé constitué d'unités monomériques issues du 3-méthylène-dihydro-2(3*H*)-furanone de formule (I) : 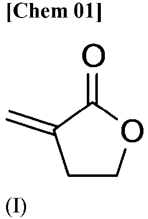 et d'unités monomériques issues de l'acide méthylène-1,4-butanedioïque de formule (II) : 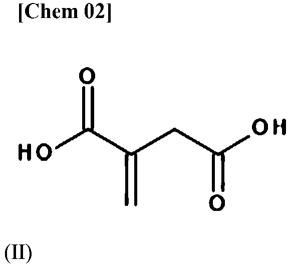 dans lequel le rapport molaire RA ayant comme numérateur le nombre de moles d'unités monomériques issues de composé de formule (I) et comme dénominateur le nombre de moles d'unités monomériques issues du composé de formule (II) est supérieur ou égal à 0,4 et inférieur ou égal à 3,0.

Dans le cadre de la présente invention les monomères de formules (I) et de formule (II) tel que définis ci-dessus sont disponibles dans le commerce et peuvent être obtenus à partir de biomasse. L'alpha-méthylène-gamma-butyrolactone est connu sous le nom de Tulipalin A et l'acide méthylène-1,4-butanedioïque de formule (II) est connu sous le numéro de d'acide itaconique.

Selon un aspect particulier de la présente invention le copolymère linéaire ou réticulé selon tel que défini précédemment est caractérisé en ce que ledit rapport molaire RA est supérieur ou égal à 1,5 et inférieur ou égal à 2,5.

Selon un autre aspect particulier de la présente invention lorsque le copolymère tel que défini précédemment est réticulé et le rapport molaire RB ayant comme numérateur le nombre de moles d'unités monomériques issues du monomère de réticulation et comme dénominateur la somme des nombres de moles d'unités monomériques issues du composé de formule (I) et de moles d'unités monomériques issues du composé de formule (II) est supérieur ou égal à 0,0010 et inférieur ou égal à 0,0070 et est plus particulièrement supérieur ou égal à 0,0020 et inférieur ou égal à 0,0060.

Selon un autre aspect particulier de la présente invention lorsque le copolymère tel que défini précédemment est réticulé, les unités monomériques issues du monomère de réticulation, le sont d'un composé choisi dans le groupe constitué par le méthylène bis(acrylamide) (MBA) (Nombre CA = 110-26-9), le tétraacrylate de pentaérythritol (PETA) (Nombre CA = 4986-89-4), le triacrylate de triméthylol propane (TMPTA) (Nombre CA = 15625-89-5), la triallylamine (TAA), le pentaérythritol triallyléther (APE) (Nombre CA = 1471-17-6), le diacrylate de 1,6-hexanediol (HDDA) (Nombre CA = 13048-33-4), le diacrylate d'éthylèneglycol (EGDA) (Nombre CA = 2274-11-5) et le diallyloxyacétate de sodium (DAOAS) et, plus particulièrement dans le groupe constitué par le tétraacrylate de pentaérythritol (PETA) et le triacrylate de triméthylol propane (TMPTA).

L'invention a aussi pour objet un procédé de préparation du copolymère linéaire ou réticulé tel que défini ci-dessus comprenant les étapes successives suivantes :
- une étape a) de mise à disposition :
   - d'un solvant choisi dans le groupe comprenant l'eau, l'éthanol, le propanol, l'isopropanol, le butanol, l'isobutanol, les sec-butanol, tert-butanol, l'acétone, la méthyl éthyl cétone, le cyclohexane, l'acétate d'éthyle ou un mélange de deux ou de plusieurs d'entre eux ;
   - dudit monomère de formule (II) et dudit monomère de formule (I) dans des proportions molaires telles que le rapport molaire R'A ayant comme numérateur le nombre de moles de composé de formule (I) et comme dénominateur le nombre de moles de composé de formule (II) soit supérieur ou égal à 0,4 et inférieur ou égal à 3,0 ; et
   - optionnellement dudit monomère de réticulation choisi dans le groupe constitué par le méthylène bis(acrylamide), le tétraacrylate de pentaérythritol, le triacrylate de triméthylol propane, la triallylamine pentaérythritol triallyléther, le diacrylate de 1,6-hexanediol, le diacrylate d'éthylèneglycol et le diallyloxyacétate de sodium, dans des proportions molaires telles que le rapport molaire R'B ayant comme numérateur le nombre de moles de monomère de réticulation et comme dénominateur la somme des nombres de moles de composé de formule (I) et de composé de formule (II), soit supérieur ou égal à 0,001 et inférieur ou égal à 0,007 ;
- Une étape b) d'addition de la totalité des moles de composé de formule (II) dans le solvant mis à disposition à l'étape a) pour former une solution ou une dispersion dudit composé de formule (II),
- optionnellement une étape c) de neutralisation partielle ou totale du composé de formula (II), en ajoutant une base dans ladite solution ou dispersion formée à l'étape b), pour former une solution ou une dispersion dudit composé de formule (II) partiellement ou totalement neutralisé ;
- une étape d) d'addition soit d'une partie, soit de la totalité des moles de composé de formule (I) mises à disposition à l'étape a) dans ladite solution ou dispersion formée à l'étape b) ou dans ladite solution ou dispersion formée à l'étape c), pour former une solution ou une dispersion dudit composé de formule (II), optionnellement partiellement ou complètement neutralisé, et dudit composé de formule (I) ;
- optionnellement une étape e) d'addition soit d'une partie, soit de la totalité des moles de monomère de réticulation dans ladite solution ou dispersion obtenue à l'étape d), pour former une solution ou une dispersion dudit composé de formule (II), optionnellement partiellement ou complètement neutralisé, dudit composé de formule (I) et optionnellement dudit monomère de réticulation ;
- une étape f) de désoxygénation de ladite solution ou dispersion obtenue à l'étape d), respectivement à l'étape optionnelle e), par barbotage en son sein d'un gaz inerte, plus particulièrement d'azote, pendant une durée supérieure ou égale 30 minutes et inférieure ou égale à 90 minutes, pour obtenir une solution ou une dispersion désoxygénée dudit composé de formule (II), optionnellement partiellement ou complètement neutralisé, dudit composé de formule (I) et optionnellement dudit monomère de réticulation ;
- une étape g) de chauffage à une température supérieure ou égale à 50°C et inférieure ou égale à 95°C de ladite solution ou dispersion obtenue à l'étape f), pour obtenir une solution ou une dispersion désoxygénée et chauffée dudit composé de formule (II), optionnellement partiellement ou complètement neutralisé, dudit composé de formule (I) et optionnellement dudit monomère de réticulation ;
- une étape h) de polymérisation des monomères présents au sein de ladite solution ou dispersion désoxygénée et chauffée obtenue à l'étape g), par addition d'un amorceur de polymérisation, plus particulièrement le peroxyde dilauroyle ou le dichlorhydrate 2,2'-azobis(2-méthylpropionamidine) et maintien à une température de polymérisation supérieure ou égale à 50°C et inférieure ou égale à 95°C, pendant une durée supérieure ou égale à 150 minutes et inférieure ou égale à 300 minutes, pour obtenir un précipité dudit copolymère optionnellement réticulé attendu et optionnellement dudit monomère de formule (II) n'ayant pas réagi au sein dudit solvant mis à disposition à l'étape a) ;
- optionnellement une étape i) d'addition dans ledit solvant obtenu à l'étape h), comprenant le précipité dudit copolymère optionnellement réticulé attendu et optionnellement ledit monomère de formule (II) n'ayant pas réagi, du reste dudit composé de formule (I) et optionnellement du reste dudit monomère de réticulation mis à disposition à l'étape a), puis de polymérisation du reste des monomères présents par addition d'un amorceur de polymérisation, particulièrement le peroxyde dilauroyle ou le dichlorhydrate de 2,2'-azobis(2-méthylpropionamidine) en maintenant la température à une valeur supérieure ou égale à 50°C et inférieure ou égale à 95°C, pendant une durée supérieure ou égale à 150 minutes et inférieure ou égale à 300 minutes, pour obtenir une dispersion dudit copolymère optionnellement réticulé attendu ;
- une étape j) de refroidissement de ladite dispersion dudit copolymère optionnellement réticulé obtenu à l'étape i) jusqu'à une température supérieure ou égale à 15°C et inférieure ou égale à 30°C; et
- soit une étape k) de filtration de ladite dispersion refroidie obtenue à l'étape j), pour recueillir ledit copolymère optionnellement réticulé attendu suivie d'une étape 1) de séchage dudit copolymère optionnellement réticulé recueilli,
- soit une étape m) d'atomisation ladite dispersion refroidie obtenue à l'étape j), pour obtenir ledit copolymère optionnellement réticulé attendu sous forme de poudre.

Selon un aspect particulier du procédé de préparation du copolymère linéaire ou réticulé tel que défini ci-dessus, les étapes b), c) optionnelle, d) et e) optionnelle sont simultanées et constituent une étape B).

Selon un autre aspect particulier du procédé de préparation du copolymère linéaire ou réticulé tel que défini ci-dessus, le solvant mis à disposition à l'étape a) est soit l'eau, soit le tert-butanol soit un mélange tert-butanol-eau.

Selon cet aspect particulier ledit procédé du copolymère linéaire ou réticulé comprend plus particulièrement les étapes successives suivantes :
- une étape a) de mise à disposition :
   - d'un mélange tert-butanol-eau comprenant pour 100% massique, une proportion massique supérieure ou égale à 90% et inférieure ou égale à 98% massique de tert-butanol et une proportion massique supérieure ou égale à 2% massique et inférieure ou égale à 10% massique d'eau ;
   - dudit monomère de formule (II) et dudit monomère de formule (I) dans des proportions molaires telles que le rapport molaire R'A ayant comme numérateur le nombre de moles de composé de formule (I) et comme dénominateur le nombre de moles de composé de formule (II) soit supérieur ou égal à 1,0 et inférieur ou égal à 3,0 ; et optionnellement ;
   - dudit monomère de réticulation choisi dans le groupe constitué par le tétraacrylate de pentaérythritol et le triacrylate de triméthylol propane, dans des proportions molaires telles que le rapport molaire R'B ayant comme numérateur le nombre de moles de monomère de réticulation et comme dénominateur la somme des nombres de moles de composé de formule (I) et de composé de formule (II), soit supérieur ou égal à 0,003 et inférieur ou égal à 0,005 ;
- une étape B) d'addition dans ledit mélange tert-butanol-eau dans le solvant mis à disposition à l'étape a) de la totalité des moles de composé de formule (II) dudit composé de formule (II), de 50% des moles de composé de formule (I) et optionnellement de 50% des moles dudit monomère de réticulation pour former une solution ou une dispersion dudit composé de formule (II), dudit composé de formule (I) et optionnellement dudit monomère de réticulation ;
- une étape f) de désoxygénation de ladite solution ou dispersion obtenue à l'étape B), par barbotage d'azote en son sein, pendant une durée supérieure ou égale 45 minutes et inférieure ou égale à 60 minutes, pour obtenir une solution ou une dispersion désoxygénée dudit composé de formule (II), dudit composé de formule (I) et optionnellement dudit monomère de réticulation ;
- une étape g) de chauffage à une température supérieure ou égale à 50°C et inférieure ou égale à 85°C de ladite solution ou dispersion obtenue à l'étape f), pour obtenir une solution ou une dispersion désoxygénée et chauffée dudit composé de formule (II), dudit composé de formule (I) et optionnellement dudit monomère de réticulation;
- une étape h) de polymérisation des monomères présents au sein de ladite solution ou dispersion désoxygénée et chauffée obtenue à l'étape g), par addition de peroxyde dilauroyle et maintien à une température de polymérisation supérieure ou égale à 75°C et inférieure ou égale à 85°C, pendant un durée supérieure ou égale à 150 minutes et inférieure ou égale à 200 minutes pour obtenir une précipité dudit copolymère optionnellement réticulé attendu et optionnellement dudit monomère de formule (II) n'ayant pas réagi au sein dudit solvant mis à disposition à l'étape a) et ;
- une étape i) d'addition dans ledit solvant obtenu à l'étape h), comprenant le précipité dudit copolymère optionnellement réticulé attendu et optionnellement ledit monomère de formule (II) n'ayant pas réagi, du reste dudit composé de formule (I) et optionnellement du reste dudit monomère de réticulation mis à disposition à l'étape a), puis de polymérisation du reste des monomères présents par addition de peroxyde dilauroyle et maintien à une température de polymérisation supérieure ou égale à 75°C et inférieure ou égale à 85°C, pendant une durée supérieure ou égale à 150 minutes et inférieure ou égale à 200 minutes, pour obtenir une dispersion dudit copolymère optionnellement réticulé attendu ;
- une étape j) de refroidissement de ladite dispersion dudit copolymère optionnellement réticulé obtenu à l'étape i) jusqu'à une température supérieure ou égale à 15°C et inférieure ou égale à 30°C; et
- soit une étape k) de filtration de ladite dispersion refroidie obtenue à l'étape j), pour recueillir ledit copolymère optionnellement réticulé attendu suivie d'une étape 1) de séchage dudit copolymère optionnellement réticulé recueilli,
- soit une étape m) d'atomisation ladite dispersion refroidie obtenue à l'étape j) pour obtenir ledit copolymère optionnellement réticulé attendu sous forme de poudre.

Le procédé tel que défini ci-dessus permet d'obtenir des copolymères d'origine naturelle qui sont des substituts intéressants au polymères d'origine pétrolière encore utilisés aujourd'hui en en détergence qu'elle soit industrielle ou ménagère.

C'est pourquoi l'invention a aussi pour objet l'utilisation d'un copolymère linéaire ou réticulé tel que défini précédemment, en vue d'épaissir, de stabiliser ou d'émulsionner une formulation détergente à usage industriel ou ménager, comportant une phase polaire ou d'y suspendre des particules solides.

Elle a aussi pour objet une formulation détergente à usage industriel ou ménager, comportant une phase polaire, caractérisée en ce qu'elle comprend pour 100% de sa masse, de 0,1% à10,0% et plus particulièrement de 0,5% à 5,0% d'un copolymère linéaire ou réticulé tel que défini précédemment, comme agent épaississant, comme agent stabilisant ou comme agent émulsionnant de ladite formulation détergente à usage industriel ou ménager, comportant une phase polaire ou comme agent apte et destiné à suspendre des particules solides au sein de ladite formulation détergente à usage industriel ou ménager, comportant une phase polaire.

Par formulation détergente à usage industriel ou ménager, comportant une phase polaire, on entend au sens de la présente invention des compositions liquides à 20°C, conçues et utilisées pour le nettoyage de différents types de surfaces, par exemple les fibres textiles, le verre, la céramique, les carrelages, le bois, le métal, les matériaux composites. Elles trouvent leurs applications pour nettoyer lesdites surfaces solides de salissures, comme le nettoyage de bouteilles ou de vaisselle manuellement ou en machine, le nettoyage du linge manuellement ou en machine, le nettoyage des sols, des surfaces métalliques souillées par des graisses, des vitres, des toilettes ou des cuves de stockage.

Dans le cadre de la présente invention, la phase polaire constitutive de la formulation détergente à usage industriel ou ménager, comportant une phase polaire est notamment choisie dans le groupe constitué par l'eau, les mélanges hydroalcooliques, comme les mélanges eau-éthanol, eau-propanol, eau-isopropanol, eau-butanol, eau isobutanol, eau-sec-butanol et eau-tert-butanol, les mélanges eau-polyols comme les mélanges eau-éthylèneglycol, eau-propylèneglycol, eau-butylèneglycol, eau-glycérol ou eau-1,3-propanediol.

Parmi ces formulations détergentes à usage industriel ou ménager, comportant une phase polaire, on peut distinguer les formulations détergentes alcalines et les formulations détergentes acides. Elles se présentent généralement sous la forme d'une solution, d'une solution aqueuse, d'une émulsion ou d'une microémulsion à phase continue aqueuse, d'une émulsion ou d'une microémulsion à phase continue huileuse, d'un gel aqueux, d'une mousse, ou encore sous la forme d'un aérosol. Elle peut être appliquée directement par trempage, par aspersion ou par vaporisation sur la surface à nettoyer ou bien par l'intermédiaire de tout type de support destiné à être mis en contact avec la surface solide à nettoyer (papier, lingette, textile).

Dans le cadre de la présente invention par agent stabilisant de ladite formulation détergente à usage industriel ou ménager, comportant une phase polaire, on signifie que ledit copolymère linéaire ou réticulé tel que défini précédemment, est apte et destiner à stabiliser lesdites formulations qui sont sous forme d'une émulsions ou d'une microémulsions, en leur conférant un aspect homogène pendant le stockage dans différentes conditions, et plus particulièrement à 25°C pendant une durée au moins égale à un mois, et plus particulièrement à 4°C pendant une durée au moins égale à un mois, et plus particulièrement à 45°C pendant une durée au moins égale à un mois.

Dans le cadre de la présente invention par agent apte et destiné à suspendre des particules solides au sein de ladite formulation aqueuse détergente à usage industriel ou ménager comportant une phase polaire, il est signifié que ledit copolymère linéaire ou réticulé tel que défini précédemment, est apte et destiné à suspendre des particules solides ayant un diamètre moyen apparent compris entre un micromètre et cinq millimètres, plus particulièrement entre dix micromètres et un millimètre, qui peuvent revêtir différentes géométries, régulières ou irrégulières et notamment se présenter sous forme de perles, de billes, de tiges, de paillettes, de lamelles ou de polyèdres. Comme exemples de telles particules solides, il y a les micas, les oxydes de fer, de titane, de zinc, ou d'aluminium, le talc, la silice, le kaolin, les argiles, le nitrure de bore, les carbonates de calcium ou de magnésium, l'hydrogénocarbonate de magnésium, les pigments colores inorganiques, les polyamides comme le nylon-6, les polyéthylènes, les polypropylènes, les polystyrènes, les polyesters, les polymères acryliques ou méthacryliques comme les polyméthylméthacrylates, le polytétrafluoroéthylène, les cires cristallines ou microcristallines, des sphères poreuses, le sulfure de sélénium, le pyrithione de zinc, les amidons, les alginates, les fibres de végétaux, les particules de Loofah, les particules d'éponges.

De façon générale ladite formulation détergente à usage industriel ou ménager, comportant une phase polaire objet de la présente invention, comporte également des ingrédients habituellement mis en œuvre dans le domaine du nettoyage de surfaces solides ou de fibres textiles, comme les tensioactifs détergents non-ioniques, cationiques ou amphotères, des polymères cationiques ou non-ioniques, des agents tensioactifs démoussants ou peu moussants, des agents épaississants, des enzymes, des agents de blanchiment, des agents anticorrosion, des solvants, des agents acides, des agents alcalins, des agents anticalcaire, des agents conservateurs, des parfums, des colorants, des agents répulsifs, des agents oxydants, des adjuvants de détergence, des agents antisalissure, les agents anti-redéposition.

Par agents tensioactifs détergents, on désigne des agents de surface confèrent à la ladite formulation détergente à usage industriel ou ménager, comportant une phase polaire telle que définie précédemment, la capacité de détacher les salissures présentes sur les surfaces solides à nettoyer, et de les maintenir en suspension, pour être ensuite éliminées lors de l'étape de rinçage. Ces agents tensioactifs détergents peuvent être de nature anionique, cationique, amphotère ou non-ionique.
- Comme exemples de agents tensioactifs détergents anioniques optionnellement présents dans la formulation détergente telle que définie ci-dessus, il y a les sels de métaux alcalins, de métaux alcalino-terreux, d'ammonium, d'amines ou d'amino alcools, d'alkyléthers sulfates, d'alkyl sulfates, d'alkylamidoéther sulfates, d'alkylarylpolyéther sulfates, de monoglycérides sulfates, d'alpha-oléfinesulfonates, de paraffines sulfonates, d'alkyl phosphates, d'alkyléther phosphates, d'alkyl sulfonates, d'alkylamide sulfonates, d'alkylaryl sulfonates, d'alkyl carboxylates, d'alkylsulfosuccinates, d'alkyléther sulfosuccinates, d'alkylamide sulfosuccinates, d'alkyl sulfo-acétates, d'alkyl sarcosinates, d'acyliséthionates, de N-acyl taurates, d'acyl lactylates, de dérivés N-acylés d'acides aminés, de dérives N-acyles de peptides, de dérivés N-acyles de protéines et d'acides gras ;
- Comme exemples de tensioactifs amphotères détergents optionnellement présents dans la formulation détergente telle que définie ci-dessus, il y a les alkyl bétaïnes, les alkylamidobétaïnes, les sultaïnes, les alkylamidoalkylsulfobétaïnes, les dérivés d'imidazolines, les phosphobétaïnes, les amphopolyacétates et les amphopropionates, le beta alanine, N-(2-carboxy éthyl)-N(2-éthyl hexyl) de sodium commercialise sous le nom de marque TOMAMINE^{®} 30 AMPHOTERIC 400 SURFACTANT ;
- Comme exemples de tensioactifs cationiques détergents optionnellement présents dans la formulations détergentes telle que définie ci-dessus, il y a les dérivés d'ammoniums quaternaires.
- Comme exemples de tensioactifs non ioniques détergents optionnellement présents dans la formulation détergente telle que définie ci-dessus, il y a les alkylpolyglycosides comportant un radical aliphatique, linéaire ou ramifié, saturé ou insaturé, et comportant de 8 à 16 atomes de carbone; les dérivés d'huile de ricin, les polysorbates, les amides de coprah, les N-alkylamines.

Comme exemples d'agents acides optionnellement présents dans la formulation détergente telle que définie ci-dessus, il y a :
- les acides minéraux comme acides chlorhydrique, nitrique, phosphorique, sulfurique, sulfamique hypophosphoreux, phosphoreux, hypochloreux, perchlorique, borique, manganique, permanganique, chromique, periodique, iodique, hypo-iodeux, bromohydrique, iodhydrique et fluorhydrique ;
- les acides organiques comme les acides formique, carbonique, acétique, propionique, benzoïque, salicylique, oxalique, succinique, glutamique, adipique, glycolique, lactique, malique, maléique, tartrique, citrique, sorbique, dihydro acétique, diméthyl sulfamique, fumarique, glutamique, isopropyl sulfamique, valérique, benzènesulfonique, xylènesulfonique, 2-éthyl-hexanoïque, caprique, caproïque, cresylique, dodécylbenzènesulfonique, peracétique, chloroacétique et gluconique.

Comme exemples d'agents alcalins optionnellement présents dans la formulation détergente telle que définie ci-dessus, il y a les hydroxydes de métaux alcalins ou alcalino-terreux comme les hydroxydes de sodium, de potassium, de baryum ou de calcium.

Comme exemples d'agents anticalcaires optionnellement présents dans la formulation détergente telle que définie ci-dessus, il y a les éléments du groupe constitué par :
- les agents séquestrants qui ont pour effet de complexer les ions calcium et magnésium pour former des complexes hydrosolubles ensuite éliminés pendant le rinçage, comme le tripolyphosphate de sodium (TPP), l'éthylènediaminetétracetate (EDTA), le tétraacétyléthylenediamine (TAED), le méthyl glycine diacétate (MGDA), le nitrolotriacétate de sodium (Na3NTA), les gluconates de sodium ou de potassium, les érythorbates de sodium ou de potassium, les polycarboxylates de sodium ou de potassium, et le citrate de sodium ;
- les agents échangeurs d'ions qui ont pour effet d'échanger leurs ions sodium et de complexer les ions calcium et magnésium pour former des complexes hydrosolubles ensuite éliminés pendant le rinçage, comme les zéolithes ou aluminosilicates de sodium, ou les silicates de sodium lamellaires ; et
- les agents précipitants qui ont pour effet d'éliminer les ions responsables de la solidité de l'eau en formant des composés de calcium insolubles, éliminés par la suite avec les salissures, comme le carbonate de calcium et le métasilicate de sodium.

Selon un aspect plus particulier, la formulation détergente telle que définie ci-dessus comprend au moins agent anticalcaire choisi parmi les éléments du groupe constitué par le métasilicate de sodium, le tripolyphosphate de sodium (TPP), le l'éthylènediaminetetracetate (EDTA), le tétraacétyléthylènediamine (TAED), le méthyl glycine diacetate (MGDA), le nitrolotriacetate de sodium (Na3NTA), le gluconate de sodium, le citrate de sodium et le carbonate de calcium.

Comme exemples de tensioactifs non-ioniques démoussants ou peu moussants optionnellement présents dans la formulation détergente telle que définie ci-dessus, il y a :
- des copolymères blocs d'oxyde d'éthylène et d'oxyde de propylène, et tout particulièrement les copolymères blocs d'oxyde d'éthylène et d'oxyde de propylène commercialisés sous le nom de marque PLURONIC^{™}, le PLURONIC^{™}PE 6100 et le PLURONIC^{™}PE 6200,
- des tensioactifs non ioniques démoussants de formule : R1-X-((CH2-CH(CH3)-O)u-(CH2-CH2-O)v-Y)w dans laquelle R1 représente un radical aliphatique hydrocarboné, saturé ou insaturé, linéaire ou ramifié, comportant de 6 à 18 atomes de carbone, X représente un atome d'azote ou un atome d'oxygène, u et v, identiques ou différents, représentent chacun un nombre entier compris entre 1 et 50, w est soit égal à 1 si X représente un atome d'oxygène, soit égal à 1 ou à 2 si X représente un atome d'azote, et Y représente un groupe fonctionnel bloquant choisi parmi les éléments du groupe constitue par les radicaux alkyles linéaires comportant de 4 à 8 atomes de carbone, comme le radical butyle, le radical benzyle, un groupe oxyde de butylène ; par exemple TERGITOL^{™} L61E et le TERGITOL^{™} L64E
- des tensioactifs non ioniques peu moussant de formule R8-O-(S')q-H dans laquelle S' représente le reste d'un sucre réducteur choisis parmi les éléments du groupe constitue par le glucose, le xylose et l'arabinose, R8 représente un radical hydrocarboné saturé, linéaire ou ramifié, comportant de 6 à 10 atomes de carbone et q' représente un nombre décimal supérieur ou égal à 1,05 et inférieur ou égal à 5,00 ; par exemple les hexylpolyglucosides, les 2-ethyl hexyl polyglucosides, les n-heptyl polyglucosides ou les n-octyl polyglucosides ; les monoglycérides alcoxylés, les diglycérides alcoxylés, les hydrocarbures terpéniques alcoxylés tels que les alpha ou béta-pinènes éthoxylés et/ou propoxylés, contenant de 1 à 30 motifs oxyéthylène et/ou oxypropylène, les produits résultant de la condensation de l'oxyde d'éthylène ou de l'oxyde de propylène avec l'éthylènediamine, tels les TETRONIC^{™} commercialisés par BASF, les acides gras éthoxylés et/ou propoxylés en C8-C18 contenant de 5 à 25 moles d'oxyde d'éthylène et/ou de propylène, les amides gras éthoxylés contenant de 5 à 30 moles d'oxyde d'éthylène, les amines éthoxylées contenant de 5 à 30 moles d'oxyde d'éthylène, les amidoamines alcoxylées contenant de 1 à 50, de préférence de 1 à 25, tout particulièrement de 2 à 20 moles d'oxyde d'éthylène et/ou de propylène.

Comme exemples d'agents épaississants ou gélifiants optionnellement présents dans la formulation détergente telle que définie ci-dessus, il y a :
- les polysaccharides constitués uniquement d'oses, comme les glucanes ou homopolymères du glucose, les glucomannoglucanes, les xyloglycanes, les galactomannanes dont le degré de substitution (DS) des unités de D-galactose sur la chaine principale de D-mannose est compris entre 0 et 1, et plus particulièrement entre 1,00 et 0,25, comme les galactomannanes provenant de la gomme de cassia (DS = 0,20), de la gomme de caroube (DS = 0,25), de la gomme de tara (DS = 0,33), de la gomme de guar (DS = 0,50), de la gomme de fénugrec (DS = 1,00).
- les polysaccharides constitues de dérivés d'oses, comme les galactanes sulfates et plus particulièrement les carraghénanes et l'agar, les uronanes et plus particulièrement les algines, les alginates et les pectines, les hétéropolymères d'oses et d'acides uroniques et plus particulièrement la gomme xanthane, la gomme gellane, les exsudats de gomme de arabique et de gomme de karaya, les glucosaminoglycanes ;
- les dérivés de cellulose comme la méthyl-cellulose, l'éthyl-cellulose, l'hydroxypropyl cellulose, les silicates, l'amidon, les dérivés hydrophiles de l'amidon, les polyuréthanes ;
- les agents épaississants inorganiques comme par exemple les argiles, l'hectorite, la saponite, la sauconite, la vermiculite ou la silice colloïdale.

Comme exemples d'agents abrasifs optionnellement présents dans la formulation détergente telle que définie ci-dessus, il y a des matériaux d'origine naturelle comme des copeaux de bois ou de noyaux, des matériaux abrasifs inorganiques tels que des oxydes, des quartz, des terres diatomées, des dioxydes de silice colloïdales, des matériaux abrasifs organiques tels que des polyoléfines comme les polyéthylènes et les polypropylènes, des polystyrènes, des résines d'acétonitrile-butadiène-styrène, des mélamines, des résines phénoliques, des résines époxy, des résines polyuréthanes.

Comme exemples autres solvants optionnellement présents dans la formulation détergente telle que définie ci-dessus, il y a l'alcool benzylique, les solvants chlorés, l'acétone, le méthyl éthyl éther, le méthyl isobutyl éther, les acétates de butyle, d'éthyle, d'isopropyle ou d'isobutyle ; les solvants aromatiques, les isoparaffines, l'isododécane, les lactates d'éthyle ou de butyle, les solvants terpéniques, les esters méthyliques de colza, les esters méthyliques de tournesol, le propylène glycol n-méthyl ether, le dipropylene glycol n-methyl ether, le tripropylène glycol n-méthyl éther, le propylène glycol n-butyl éther, le di propylène glycol n-butyl éther, le tri propylène glycol n-butyl éther, le propylène glycol n-propyl éther, le di propylène glycol n-propyl éther, le propylène glycol mono méthyl éther acétate, le propylène glycol di acétate, le propylène glycol phényl éther, l'éthylène glycol phényl éther ou le di propylène glycol diméthyl éther.

Comme exemples d'enzymes optionnellement présentes dans la formulation détergente telle que définie ci-dessus, il y a les protéases, les amylases, les lipases, les cellulases et les peroxydases.

Les formulations détergentes à usage industriel ou ménager, comportant une phase polaire sont généralement préparées par un procédé comprenant les étapes successives suivantes :
- une étape a) de préparation d'un milieu aqueux comprenant de l'eau, optionnellement un alcool ou un polyol, dans une cuve à double enveloppe dans laquelle circule un fluide caloporteur à une température régulée ;
- une étape b) d'addition progressive dudit copolymère linéaire ou réticulé objet de la présente invention dans le milieu aqueux préparé à l'étape a) à une température modérée comprise entre 20°C et 60°C, sous agitation modérée non cisaillante,
- une étape c) au cours de laquelle au moins un agent tensioactif détergent est ajouté dans le milieu résultant de l'étape b), et optionnellement
- une étape d) au cours de laquelle un ou plusieurs ingrédients auxiliaires sont ajoutés dans le milieu résultant de l'étape c).

Selon un autre aspect, l'invention a pour objet l'utilisation de ladite formulation détergente à usage industriel ou ménager, comportant une phase polaire, telle que définie précédemment, pour nettoyer les surfaces.

Selon un autre aspect, l'invention a pour objet un procédé de nettoyage d'une surface, caractérisé en ce qu'il comprend au moins une première étape a1) d'application de ladite formulation détergente à usage industriel ou ménager, comportant une phase polaire telle que définie précédemment, suivie d'au moins une étape b1) de rinçage de ladite surface.

Dans le cadre de la présente invention par surface on désigne notamment les sols, les murs, les carreaux de fenêtres, les carrelages, les appareils électroménagers, la vaisselle, les plans de travail, la robinetterie, les éviers, des cuves de stockage de produits chimiques, alimentaires ou agricoles, les véhicules, ou les surfaces textiles. Les matériaux constituant ces surfaces solides sont par exemple le verre (sodocalcique, fluorocalcique, borosilicate, cristal), la porcelaine, la faïence, la céramique, les plastiques polycarbonates, polypropylènes, l'acier inoxydable, l'argent, le cuivre, l'aluminium, le bois, les résines synthétiques, la vitrocéramique, le linoleum, et peuvent être revêtus de peintures, de vernis.

Dans l'étape a1) du procédé tel que défini ci-dessus, ladite formulation détergente est appliquée sur la surface comprenant les salissures à nettoyer par tout moyen, par exemple en plein bain, par aspersion ou par application par l'intermédiaire d'un support constitue de fibres textiles synthétiques ou naturelles, tissées ou non tissées, ou de papier, préalablement imprégné de celle-ci.

Dans l'étape b1) du procédé tel que défini ci-dessus, le rinçage de la surface sur laquelle a été appliquée ladite formulation détergente lors de l'étape a1), est réalisé en plein bain ou par aspersion d'eau. L'étape b1) peut être réalisée à température ambiante ou à une température comprise entre 30°C et 80°C, plus particulièrement à une température comprise entre 30°C et 65°C.

Les exemples suivants illustrent l'invention sans toutefois la modifier.
- Préparation d'un copolymère Tulipalin A-acide itaconique (ratio molaire RA= 2), réticulé par du tétraacrylate de pentaérythritol (ratio molaire RB = 0,0040) selon l'invention (P1).
30,0 g de tert-butanol et 1,5 g d'eau déminéralisée sont versés dans un réacteur sous agitation mécanique. 6,50 g (0,05 mole) d'acide itaconique, 4,91 g (0,05 mole) de Tulipalin A et 0,11 g (0,0003 mole) de tétraacrylate de pentaérythritol y sont ensuite ajoutés. La dispersion obtenue est désoxygénée par barbotage d'azote pendant cinquante minutes puis chauffée à 80°C. 0,20 g de peroxyde de dilauroyle y est ensuite ajouté et le tout est maintenu à 80°C sous agitation mécanique pendant trois heures. 4,91 g (0,05 mole) de Tulipalin A sont alors ajoutés (pour atteindre le ratio molaire RA = 2) suivis de 0,11 g (0,0003 mole) de tétraacrylate de pentaérythritol (pour atteindre le ratio molaire RB = 0,0040) et de 0,20 g de peroxyde de dilauroyle. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 13,78 g du copolymère attendu (P1) sont ainsi isolés, ce qui correspond à un rendement final de 83,4%.
- Préparation d'un copolymère Tulipalin A-acide itaconique (RA = 3), réticulé par du tétraacrylate de pentaérythritol (RB = 0,0039) selon l'invention (P2)
30,0 g de tert-butanol et 1,5 g d'eau déminéralisée sont versés dans un réacteur sous agitation mécanique. 4,88 g (0,0375 mole) d'acide itaconique, 5,30 g (0,054 mole) de Tulipalin A et 0,10 g (0,0002838 mole) de tétracrylate de pentaérythritol y sont ensuite ajoutés. La dispersion obtenue est désoxygénée par barbotage d'azote pendant 45 minutes puis ensuite chauffée à 80°C. 0,18 g de peroxyde de dilauroyle y est alors ajouté et le tout est maintenu est maintenu à 80°C sous agitation mécanique pendant trois heures. 5,30 g (0,054 mole) de Tulipalin A sont alors ajoutés (pour atteindre le ratio molaire RA = 3), suivi de 0,10 g (0,0002838 mole) de tétraacrylate de pentaérythritol (pour atteindre un ratio molaire RB = 0,0039) et 0,18 g de peroxyde de dilauroyle sont de nouveau rajoutés au milieu réactionnel hétérogène. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 12,29 g du copolymère (P2) sont ainsi isolés, ce qui correspond à un rendement final de 78,4%.
- Préparation d'un copolymère de Tulipalin A-acide itaconique (RA = 0,4) réticulé par du tétraacrylate de pentaérythritol (RB = 0,0069) selon l'invention (P3)
30,0 g de tert-butanol et 1,5 g d'eau déminéralisée sont versés dans un réacteur sous agitation mécanique. 9,30 g (0,0715 mole) d'acide itaconique, 1,40 g (0,001425 mole) de Tulipalin A et 0,09 g (0,0002572 mole) de tétraacrylate de pentaérythritol y sont ensuite ajoutés. La dispersion obtenue est désoxygénée par barbotage d'azote pendant 60 minutes puis ensuite chauffée à 80°C. 0,17 g de peroxyde de dilauroyle y est alors ajouté et le tout est maintenu est maintenu à 80°C sous agitation mécanique pendant trois heures. 1,40 g (0,01425 mole) de Tulipalin A sont alors ajoutés (pour atteindre le ratio molaire RA = 0,4), suivi de 0,09 g (0,0002572 mole) de tétraacrylate de pentaérythritol (pour atteindre un ratio molaire RB = 0,0069) et 0,17 g de peroxyde de dilauroyle sont de nouveau rajoutés au milieu réactionnel hétérogène. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 3,32 g du copolymère (P3) sont ainsi isolés, ce qui correspond à un rendement final de 27%.
- Préparation d'un copolymère de Tulipalin A-acide itaconique (RA = 1) réticulé par du tétraacrylate de pentaérythritol (RB = 0,004) selon l'invention (P4)
50,0 g d'eau déminéralisée sont versés dans un réacteur sous agitation mécanique. 6,50 g (0,05 mole) d'acide itaconique, 1,39 g d'une solution de soude à 48% massique (0,00167 mole) pour solubiliser partiellement l'acide itaconique 4,91 g (0,05 mole) de Tulipalin A et 0,1057 g (0,0003 mole) de tétraacrylate de pentaérythritol y sont ajoutés. La dispersion obtenue est désoxygénée par barbotage d'azote pendant 40 minutes puis ensuite chauffée à 80°C. 0,1356 g de 2,2'azobis(2-méthylpropanamidine) y est alors ajouté et le tout est maintenu est maintenu à 80°C sous agitation mécanique pendant trois heures. Il est ensuite refroidi à 35°C et filtré sur papier et le précipité recueilli est finalement séché dans une étuve à 50°C sous un vide de 20 mbars. 4,77 g du copolymère (P4) sont ainsi isolés, ce qui correspond à un rendement final de 41,4%.
- Préparation d'un copolymère Tulipalin A-acide itaconique (RA = 2) et réticulé par du triacrylate de triméthylol propane (RB = 0,004) selon l'invention (P5)
30,0 g de tert-butanol et 1,5 g d'eau déminéralisée sont versés dans un réacteur sous agitation mécanique. 6,50 g (0,05 mole) d'acide itaconique, 4,91 g (0,05 mole) de Tulipalin A et 0,1057 g (0,0003 mole) de triacrylate de triméthylol propane y sont ensuite ajoutés. La dispersion obtenue est désoxygénée par barbotage d'azote pendant 45 minutes puis ensuite chauffée à 80°C. 0,20 g de peroxyde de dilauroyle y est alors ajouté et le tout est maintenu est maintenu à 80°C sous agitation mécanique pendant trois heures. 4,91 g (0,05 mole) de Tulipalin A sont alors ajoutés (pour atteindre le ratio molaire RA = 2), suivi de 0,1057 g (0,0003 mole) de triacrylate de triméthylol propane (pour atteindre un ratio molaire RB = 0,004) et 0,20 g de peroxyde de dilauroyle sont de nouveau rajoutés au milieu réactionnel hétérogène. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 13,01 g du copolymère (P5) sont ainsi isolés, ce qui correspond à un rendement final de 79%.
- Préparation d'un copolymère Tulipalin A-acide itaconique (RA = 2) selon l'invention (P6)
30,0 g de tert-butanol et 1,5 g d'eau déminéralisée sont versés dans un réacteur sous agitation mécanique. 6,50 g (0,05 mole) d'acide itaconique et 4,91 g (0,05 mole) de Tulipalin A y sont ensuite ajoutés. La dispersion obtenue est désoxygénée par barbotage d'azote pendant 50 minutes puis ensuite chauffée à 80°C. 0,20 g de peroxyde de dilauroyle y est alors ajouté et le tout est maintenu est maintenu à 80°C sous agitation mécanique pendant trois heures. 4,91 g (0,05 mole) de Tulipalin A sont alors ajoutés (pour atteindre le ratio molaire RA = 2) et 0,20 g de peroxyde de dilauroyle sont de nouveau rajoutés au milieu réactionnel hétérogène. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 12,36 g du copolymère (P6) sont ainsi isolés, ce qui correspond à un rendement final de 75%.
- Préparation d'un copolymère Tulipalin A (Ia)-acide itaconique (RA = 2) réalisé avec recyclage du filtrat selon l'invention (P7)
16,0 g du filtrat d'un essai de copolymérisation du Tulipalin A et de l'acide Itaconique (RA = 1 ; avec ajout du Tulipalin en une seule fois) dans le tert-butanol sont placés dans le réacteur (ce filtrat contenant de l'acide itaconique n'ayant pas réagi avec le Tulipalin A lors d'une précédente synthèse). 2,45 g (0,025 mole) de Tulipalin A sont ajoutés. La dispersion obtenue est désoxygénée par barbotage d'azote pendant 50 minutes puis chauffée à 80°C. 0,10 g de peroxyde de dilauroyle y est alors ajouté et le tout est maintenu à 80°C sous agitation mécanique pendant 6 heures. Le milieu réactionnel est ensuite refroidi à 35°C et filtré sur papier et le précipité recueilli est finalement séché dans une étuve à 50°C sous un vide de 20 mbars. 2,80 g de copolymère (P7) sont isolés correspondant à un rendement final de 48,6%.
- Préparation d'un copolymère Tulipalin A-acide itaconique (RA = 1) réticulé par du tétraacrylate de pentaérythritol (RB = 0,003) selon l'invention (P8)
30,0 g de tert-butanol et 1,5 g d'eau déminéralisée sont versés dans un réacteur sous agitation mécanique. 6,5 g (0,05 mole) d'acide itaconique, 4,9 g (0,05 mole) de Tulipalin A et 0,11 g (0,0003 mole) de tétracrylate de pentaérythritol y sont ajoutés. Une solution homogène est obtenue. Cette solution est désoxygénée par barbotage d'azote pendant 45 minutes puis chauffée à 80°C. 0,2 g de peroxyde de dilauroyle y est alors ajouté et le tout est maintenu à 80°C sous agitation mécanique pendant 3 heures. Le milieu réactionnel est ensuite refroidi à 35°C et filtré sur papier et le précipité recueilli est finalement séché dans une étuve à 50°C sous un vide de 20 mbars. 5,63 g de copolymère (P8) sont isolés correspondant à un rendement final de 48,9%.
- Préparation d'un copolymère de Tulipalin A-acide itaconique (RA = 1) réticulé par du tétraacrylate de pentaérythritol (RB = 0,003) selon l'invention (P9)
50,0 g de *tertio*-butanol et 1,5 g d'eau déminéralisée sont versés dans un réacteur sous agitation mécanique. 13,0 g (0,1 mole) d'acide itaconique, 9,8 g (0,1 mole) de Tulipalin A (soit un ratio molaire RA = 1) et 0,21 g (0,0006 mole) de tétracrylate de pentaérythritol y sont ajoutés. Une suspension est obtenue. Cette suspension est désoxygénée par barbotage d'azote pendant 45 minutes puis chauffée à 56°C. 0,4 g de peroxyde de dilauroyle y est alors ajouté et le tout est maintenu à 56°C sous agitation mécanique pendant 3 heures. Le milieu réactionnel est ensuite refroidi à 25°C et filtré sur papier et le précipité recueilli est finalement séché dans une étuve à 50°C sous un vide de 20 mbars. 5,63 g de copolymère (P9) sont isolés correspondant à un rendement final de 28,7%.
- Préparation d'un homopolymère de Tulipalin (Ia) réticulé par du tétraacrylate de pentaérythritol (P10) (hors invention)
30,0 g de tert-butanol et 1,5 g d'eau déminéralisée sont versés dans un réacteur sous agitation mécanique. 9,81 g (0,1 mole) de Tulipalin A et 0,1057 g (0,0003 mole) de tétracrylate de pentaérythritol y sont ajoutés. Une solution homogène est obtenue. Cette solution est désoxygénée par barbotage d'azote pendant 60 minutes puis chauffée à 80°C. 0,20 g de peroxyde de dilauroyle y est alors ajouté et le tout est maintenu à 80°C sous agitation mécanique pendant 3 heures. Le milieu réactionnel est ensuite refroidi à 35°C et filtré sur papier et le précipité recueilli est finalement séché dans une étuve à 50°C sous un vide de 20 mbars. 9,87 g de copolymère (P10) sont isolés. Ce polymère n'est pas soluble (même après ajout NaOH pour ajuster le pH à 6-8) dans l'eau et ne présente donc pas de propriétés épaississantes de phases aqueuses.
- Préparation hors invention d'un homopolymère d'acide itaconique (IIa) réticulé par du tétraacrylate de pentaérythritol (P11) (hors invention)
Le même procédé que celui décrit pour l'homopolymère (P10) a été mis en œuvre en remplaçant le 30,0 g tert-butanol par 50,0 g l'acétone et les 9,81 g de Tulipalin A par 13,0 g d'acide itaconique. 13,2 g de copolymère (P11) sont isolés après séchage du milieu réactionnel, de qui correspond à un rendement de 100,0%. Ce polymère est soluble dans l'eau après ajout de soude pour ajustement du pH à 6-8 mais ne présente pas de propriétés épaississantes de phases aqueuses.
- Préparation d'un copolymère Tulipalin A-acide itaconique (ratio molaire RA = 0,2), réticulé par du tétraacrylate de pentaérythritol (ratio molaire RB = 0,0055) (P12) (hors invention)
60,0 g de tert-butanol et 3,05 g d'eau déminéralisée sont versés dans un réacteur sous agitation mécanique. 21,68 g (0,16667 mole) d'acide itaconique, 1,63 g (0,01667 mole) de Tulipalin A et 0,194 g (0,00055 mole) de tétracrylate de pentaérythritol y sont ensuite ajoutés. La dispersion obtenue est désoxygénée par barbotage d'azote pendant 45 minutes puis ensuite chauffée à 80°C. 0,365 g de peroxyde de dilauroyle y est alors ajouté et le tout est maintenu est maintenu à 80°C sous agitation mécanique pendant trois heures. 1,63 g (0,01667 mole) de Tulipalin A sont alors ajoutés (pour atteindre le ratio molaire RA = 0,2), suivi de 0,194 g (0,00055 mole) de tétraacrylate de pentaérythritol (pour atteindre un ratio molaire RB = 0,0055) et 0,365 g de peroxyde de dilauroyle sont de nouveau rajoutés au milieu réactionnel hétérogène. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 3,91 g du copolymère (P5) sont ainsi isolés, ce qui correspond à un rendement final de 15,4%.
- Préparation d'un copolymère de Tulipalin A-acide itaconique (IIa) (ratio molaire RA = 4) et réticulé par du tétraacrylate de pentaérythritol (ratio molaire RB = 0,0036) (P13) (hors invention)
30,0 g de tert-butanol et 1,5 g d'eau déminéralisée sont versés dans un réacteur sous agitation mécanique. 2,60 g (0,02 mole) d'acide itaconique, 3,92 g (0,04 mole) de Tulipalin A et 0,063 g (0,00018 mole) de tétraacrylate de pentaérythritol y sont ensuite ajoutés. Une dispersion est obtenue. La dispersion obtenue est désoxygénée par barbotage d'azote pendant cinquante minutes puis chauffée à 80°C. 0,12 g de peroxyde de dilauroyle y est ensuite ajouté et le tout est maintenu à 80°C sous agitation mécanique pendant trois heures. 3,92 g (0,04 mole) de Tulipalin A sont alors ajoutés (pour atteindre le ratio molaire RA = 4) suivis de 0,063 g (0,00018 mole) de tétraacrylate de pentaérythritol (pour atteindre le ratio molaire RB = 0,0040) et de 0,12 g de peroxyde de dilauroyle. Le milieu obtenu est maintenu à 80°C sous agitation mécanique pendant trois nouvelles heures. Il est ensuite refroidi à 35°C et filtré sur papier et le précipité recueilli est finalement séché dans une étuve à 50°C sous un vide de 20 mbars. 8,9 g du copolymère attendu (P13) sont ainsi isolés, ce qui correspond à un rendement final de 84%.
- Evaluation des propriétés épaississantes des polymères préparés. Les propriétés épaississantes de copolymères à base de Tulipalin A et d'acide itaconique selon l'invention (P1), (P2), (P3), (P4),(P5), (P6), (P7), (P8) et (P9) sont consignés dans le tableau 1 suivant. Elles sont comparées à celles des polymères hors invention (P10), (P11), (P12) et (P13). Les gels sont préparés en dispersant le polymère dans l'eau et en ajustant si nécessaire le pH à une valeur supérieure ou égale à 6 et inférieure ou égale à 8 avec de la soude.

**[Tableau 1]**

| Viscosité de gels aqueux de polymère (en mPa.s) Brookfield LVT (Mobile 4 ; Vitesse 6 rpm) | | | |
|---|---|---|---|
| Polymère selon l'invention | Proportions massiques en polymère dans le gel | Sans NaCl | Avec 01% NaCl |
| P1 | 2% | 14.720 | 8.680 |
| P1 | 5% | > 100.000 | Non déterminé (n.d.) |
| P2 | 2% | 8.840 | 2.560 |
| P2 | 5% | 63.000 | n.d. |
| P3 | 2% | 13.000 | 9.640 |
| P3 | 5% | > 100.000 | 39.400 |
| P4 | 2% | 1.630 | n.d. |
| P4 | 5% | 10.000 | n.d. |
| P5 | 2% | 3.065 | 1.200 |
| P5 | 5% | 37.000 | n.d. |
| P6 | 2% | 1.220 | 860 |
| P6 | 5% | 11.600 | n.d. |
| P7 | 2% | 24.000 | n.d. |
| P7 | 5% | 580 | n.d. |
| P8 | 5% | 43.800 | n.d. |
| P9 | 5% | 34.000 | n.d. |
| Polymère hors | Proportions massiques en | | |
| P10 | | n.d. | n.d. |
| P11 | | Non épaississant | n.d. |
| P12 | 2% | 4.040 | 3.180 |
| P12 | 5% | 41.600 | n.d. |
| P13 | 2% | 5 | 5 |
| P13 | 5% | 20 | n.d. |

Exemples de formulations détergentes selon l'invention

**[Tableau 2]**

| Gel nettoyant pour fours et grilles de cuissons | |
|---|---|
| Ingrédients | Proportions massiques (%) |
| SIMULSOL^{™}OX1309L | 2 % |
| SIMULSOL^{™}SL7G | 2 % |
| Copolymère (P2) | 6 % |
| Hydroxyde de sodium: | 25 % |
| Eau: | qs 100 % |

**[Tableau 3]**

| Nettoyant pour surfaces en aluminium | |
|---|---|
| Ingrédients | Proportions massiques |
| SIMULSOL^{™}OX1309L | 3% |
| SIMULSOL^{™}SL7G | 3% |
| Copolymère (P1) | 5% |
| Acide phosphorique à 75% | 40% |
| HORDAPHOS MDGB 1% | 5% |
| Dipropylèneglycol méthyl éther | 5% |
| Eau: | qs 100% |

**[Tableau 4]**

| Ingrédients utilisés dans les formulations détergentes mentionnées ci-dessus | |
|---|---|
| Nom commercial | Composition |
| SIMULSOL^{™} OX1309L | Composition tensioactive détergente comprenant des alcools |
| SIMULSOL^{™}SL7G | solution de n-heptyl polyglucosides, agent hydrotrope et |
| HORDAPHOS MDGB 1% | Composition à base d'esters phosphoriques, utilisée comme |

## Revendications

1. Copolymère linéaire ou réticulé constitué d'unités monomériques issues du 3-méthylène-dihydro-2(3*H*)-furanone de formule (I) : 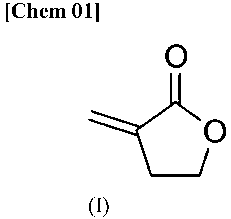
et d'unités monomériques issues de l'acide méthylène-1,4-butanedioïque de formule (II) : 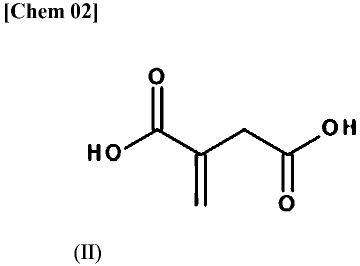
dans lequel le rapport molaire RA ayant comme numérateur le nombre de moles d'unités monomériques issues de composé de formule (I) et comme dénominateur le nombre de moles d'unités monomériques issues du composé de formule (II) est supérieur ou égal à 0,4 et inférieur ou égal à 3,0.

2. Copolymère linéaire ou réticulé selon la revendication 1, dans lequel ledit rapport molaire RA est supérieur ou égal à 1,5 et inférieur ou égal à 2,5.

3. Copolymère réticulé selon l'une quelconque des revendications 1 ou 2 dans lequel le rapport molaire RB ayant comme numérateur le nombre de moles d'unités monomériques issues du monomère de réticulation et comme dénominateur la somme des nombres de moles d'unités monomériques issues du composé de formule (I) et de moles d'unités monomériques issues du composé de formule **(II)** est supérieur ou égal à 0,0010 et inférieur ou égal à 0,0070.

4. Copolymère réticulé selon la revendication 3, dans lequel ledit rapport molaires RB est supérieur ou égal à 0,0020 et inférieur ou égal à 0,0060.

5. Copolymère réticulé selon l'une quelconque des revendication 3 ou 4, dans lequel les unités monomériques issues du monomère de réticulation, le sont d'un composé choisi dans le groupe constitué par le méthylène bis(acrylamide), le tétraacrylate de pentaérythritol, le triacrylate de triméthylol propane, la triallylamine, le pentaérythritol triallyléther, le diacrylate de 1,6-hexanediol, le diacrylate d'éthylèneglycol et le diallyloxyacétate de sodium (DAOAS).

6. Copolymère réticulé selon la revendication 5, dans lequel les unités monomériques issues du monomère de réticulation, le sont d'un composé choisi dans le groupe constitué par le tétraacrylate de pentaérythritol et le triacrylate de triméthylol propane.

7. Procédé de préparation d'un copolymère linéaire ou réticulé tel que défini à l'une quelconque des revendications 1 à 6 comprenant les étapes successives suivantes :
- une étape a) de mise à disposition :
- d'un solvant choisi dans le groupe comprenant l'eau, l'éthanol, le propanol, l'isopropanol, le butanol, l'isobutanol, les sec-butanol, tert-butanol, l'acétone, la méthyl éthyl cétone, le cyclohexane, l'acétate d'éthyle ou un mélange de deux ou de plusieurs d'entre eux ;
- dudit monomère de formule (II) et dudit monomère de formule (I) dans des proportions molaires telles que le rapport molaire R'A ayant comme numérateur le nombre de moles de composé de formule (I) et comme dénominateur le nombre de moles de composé de formule (II) soit supérieur ou égal à 0,4 et inférieur ou égal à 3,0 ; et
- optionnellement dudit monomère de réticulation choisi dans le groupe constitué par le méthylène bis(Acrylamide), le tétraacrylate de Pentaérythritol, le triacrylate de triméthylol propane, la triallylamine pentaérythritol triallyléther, le diacrylate de 1,6-hexanediol, le diacrylate d'éthylèneglycol et le diallyloxyacétate de sodium, dans des proportions molaires telles que le rapport molaire R'B ayant comme numérateur le nombre de moles de monomère de réticulation et comme dénominateur la somme des nombres de moles de composé de formule (I) et de composé de formule (II), soit supérieur ou égal à 0,001 et inférieur ou égal à 0,007 ;
- une étape b) d'addition de la totalité des moles de composé de formule (II) dans le solvant mis à disposition à l'étape a) pour former une solution ou une dispersion dudit composé de formule (II),
- optionnellement une étape c) de neutralisation partielle ou totale du composé de formula (II), en ajoutant une base dans ladite solution ou dispersion formée à l'étape b), pour former une solution ou une dispersion dudit composé de formule (II) partiellement ou totalement neutralisé ;
- une étape d) d'addition soit d'une partie, soit de la totalité des moles de composé de formule (I) mises à disposition à l'étape a) dans ladite solution ou dispersion formée à l'étape b) ou dans ladite solution ou dispersion formée à l'étape c), pour former une solution ou une dispersion dudit composé de formule (II), optionnellement partiellement ou complètement neutralisé, et dudit composé de formule (I) ;
- optionnellement une étape e) d'addition soit d'une partie, soit de la totalité des moles de monomère de réticulation dans ladite solution ou dispersion obtenue à l'étape d), pour former une solution ou une dispersion dudit composé de formule (II), optionnellement partiellement ou complètement neutralisé, dudit composé de formule (I) et dudit monomère de réticulation ;
- une étape f) de désoxygénation de ladite solution ou dispersion obtenue à l'étape d), respectivement à l'étape optionnelle e), par barbotage en son sein d'un gaz inerte, plus particulièrement d'azote, pendant une durée supérieure ou égale 30 minutes et inférieure ou égale à 90 minutes, pour obtenir une solution ou une dispersion désoxygénée dudit composé de formule (II), optionnellement partiellement ou complètement neutralisé, dudit composé de formule (I) et dudit monomère de réticulation ;
- une étape g) de chauffage à une température supérieure ou égale à 50°C et inférieure ou égale à 95°C de ladite solution ou dispersion obtenue à l'étape f), pour obtenir une solution ou une dispersion désoxygénée et chauffée dudit composé de formule (II), optionnellement partiellement ou complètement neutralisé, dudit composé de formule (I) et dudit monomère de réticulation;
- une étape h) de polymérisation des monomères présents au sein de ladite solution ou dispersion désoxygénée et chauffée obtenue à l'étape g), par addition d'un amorceur de polymérisation, plus particulièrement le peroxyde dilauroyle ou le dichlorhydrate 2,2'-azobis(2-méthylpropionamidine) et maintien à une température de polymérisation supérieure ou égale à 50°C et inférieure ou égale à 95°C, pendant une durée supérieure ou égale à 150 minutes et inférieure ou égale à 300 minutes, pour obtenir un précipité dudit copolymère optionnellement réticulé attendu et optionnellement dudit monomère de formule (II) n'ayant pas réagi au sein dudit solvant mis à disposition à l'étape a) ;
- optionnellement une étape i) d'addition dans ledit solvant obtenu à l'étape h), comprenant le précipité dudit copolymère optionnellement réticulé attendu et optionnellement ledit monomère de formule (II) n'ayant pas réagi, du reste dudit composé de formule (I) et optionnellement du reste dudit monomère de réticulation mis à disposition à l'étape a), puis de polymérisation du reste des monomères présents par addition d'un amorceur de polymérisation, particulièrement le peroxyde dilauroyle ou le dichlorhydrate de 2,2'-azobis(2-méthylpropionamidine) en maintenant la température à une valeur supérieure ou égale à 50°C et inférieure ou égale à 95°C, pendant une durée supérieure ou égale à 150 minutes et inférieure ou égale à 300 minutes, pour obtenir une dispersion dudit copolymère optionnellement réticulé attendu ;
- une étape j) de refroidissement de ladite dispersion dudit copolymère optionnellement réticulé obtenu à l'étape i) jusqu'à une température supérieure ou égale à 15°C et inférieure ou égale à 30°C; et
- soit une étape k) de filtration de ladite dispersion refroidie obtenue à l'étape j), pour recueillir ledit copolymère optionnellement réticulé attendu suivie d'une étape 1) de séchage dudit copolymère optionnellement réticulé recueilli,
- soit une étape m) d'atomisation ladite dispersion refroidie obtenue à l'étape j), pour obtenir ledit copolymère optionnellement réticulé attendu sous forme de poudre.

8. Procédé de préparation selon la revendication 7, dans lequel les étapes b), c) optionnelle, d) et e) optionnelle sont simultanées et constituent une étape B).

9. Procédé de préparation selon l'une des revendications 7 ou 8, dans lequel le solvant mis à disposition à l'étape a) est soit l'eau, soit le tert-butanol soit un mélange tert-butanol-eau.

10. Procédé de préparation selon la revendication 9, comprenant les étapes successives suivantes :
- une étape a) de mise à disposition :
- d'un mélange tert-butanol-eau comprenant pour 100% massique, une proportion massique supérieure ou égale à 90% et inférieure ou égale à 98% massique de tert-butanol et une proportion massique supérieure ou égale à 2% massique et inférieure ou égale à 10% massique d'eau ;
- dudit monomère de formule (II) et dudit monomère de formule (I) dans des proportions molaires telles que le rapport molaire R'A ayant comme numérateur le nombre de moles de composé de formule (I) et comme dénominateur le nombre de moles de composé de formule (II) soit supérieur ou égal à 1,0 et inférieur ou égal à 3,0 ; et optionnellement
- dudit monomère de réticulation choisi dans le groupe constitué par le tétraacrylate de pentaérythritol et le triacrylate de triméthylol propane, dans des proportions molaires telles que le rapport molaire R'B ayant comme numérateur le nombre de moles de monomère de réticulation et comme dénominateur la somme des nombres de moles de composé de formule (I) et de composé de formule (II), soit supérieur ou égal à 0,003 et inférieur ou égal à 0,005 ;
- une étape B) d'addition dans ledit mélange tert-butanol-eau dans le solvant mis à disposition à l'étape a) de la totalité des moles de composé dudit composé de formule (II), de 50% des moles de composé de formule (I) et optionnellement de 50% des moles dudit monomère de réticulation pour former une solution ou une dispersion dudit composé de formule (II), dudit composé de formule (I) et optionnellement dudit monomère de réticulation ;
- une étape f) de désoxygénation de ladite solution ou dispersion obtenue à l'étape B), par barbotage d'azote en son sein, pendant une durée supérieure ou égale 45 minutes et inférieure ou égale à 60 minutes, pour obtenir une solution ou une dispersion désoxygénée dudit composé de formule (II), dudit composé de formule (I) et optionnellement dudit monomère de réticulation ;
- une étape g) de chauffage à une température supérieure ou égale à 75°C et inférieure ou égale à 85°C de ladite solution ou dispersion obtenue à l'étape f), pour obtenir une solution ou une dispersion désoxygénée et chauffée dudit composé de formule (II), dudit composé de formule (I) et optionnellement dudit monomère de réticulation ;
- une étape h) de polymérisation des monomères présents au sein de ladite solution ou dispersion désoxygénée et chauffée obtenue à l'étape g), par addition de peroxyde dilauroyle et maintien à une température de polymérisation supérieure ou égale à 75°C et inférieure ou égale à 85°C, pendant un durée supérieure ou égale à 150 minutes et inférieure ou égale à 200 minutes pour obtenir une précipité dudit copolymère optionnellement réticulé attendu et optionnellement dudit monomère de formule (II) n'ayant pas réagi au sein dudit solvant mis à disposition à l'étape a) et ;
- une étape i) d'addition dans ledit solvant obtenu à l'étape h), comprenant le précipité dudit copolymère optionnellement réticulé attendu et optionnellement ledit monomère de formule (II) n'ayant pas réagi, du reste dudit composé de formule (I) et optionnellement du reste dudit monomère de réticulation mis à disposition à l'étape a), puis de polymérisation du reste des monomères présents par addition de peroxyde dilauroyle et maintien à une température de polymérisation supérieure ou égale à 50°C et inférieure ou égale à 85°C, pendant une durée supérieure ou égale à 150 minutes et inférieure ou égale à 200 minutes, pour obtenir une dispersion dudit copolymère optionnellement réticulé attendu ;
- une étape j) de refroidissement de ladite dispersion dudit copolymère optionnellement réticulé obtenu à l'étape i) jusqu'à une température supérieure ou égale à 15°C et inférieure ou égale à 30°C; et
- soit une étape k) de filtration de ladite dispersion refroidie obtenue à l'étape j), pour recueillir ledit copolymère optionnellement réticulé attendu suivie d'une étape 1) de séchage dudit copolymère optionnellement réticulé recueilli,
- soit une étape m) d'atomisation ladite dispersion refroidie obtenue à l'étape j) pour obtenir ledit copolymère optionnellement réticulé attendu sous forme de poudre.

11. Utilisation du copolymère linéaire ou réticulé tel que défini à l'une quelconque des revendications 1 à 6, en vue d'épaissir, de stabiliser ou d'émulsionner une formulation détergente à usage industriel ou ménager, comportant une phase polaire ou d'y suspendre des particules solides.

12. Formulation détergente à usage industriel ou ménager, comportant une phase polaire, **caractérisée en ce qu'**elle comprend pour 100,0% de sa masse, de 0,1% à10,0% et plus particulièrement de 0,5% à 5,0% d'un copolymère linéaire ou réticulé tel que défini à l'une quelconque des revendications 1 à 6, comme agent épaississant, comme agent stabilisant ou comme agent émulsionnant de ladite formulation détergente à usage industriel ou ménager, comportant une phase polaire ou comme agent apte et destiné à suspendre des particules solides au sein de ladite formulation détergente à usage industriel ou ménager, comportant une phase polaire.

13. Utilisation de ladite formulation détergente à usage industriel ou ménager, comportant une phase polaire, telle que définie à la revendication 12, pour nettoyer les surfaces.

14. Procédé de nettoyage d'une surface, **caractérisé en ce qu'**il comprend au moins une première étape a1) d'application de ladite formulation détergente à usage industriel ou ménager, comportant une phase polaire telle que définie à la revendication 12, suivie d'au moins une étape b1) de rinçage de ladite surface.
